# EUROPEAN PATENT SPECIFICATION

(11) **EP 2 061 204 B1**
(45) Date of publication and mention of the grant of the patent: **22.02.2012**
(21) Application number: 07291373.4
(22) Date of filing: 16.11.2007
(51) Int. Cl.: H04L 29/06

(54) **Method of establishing an IMS-session**
Verfahren zur Erstellung einer IMS-Sitzung
Procédé pour établir une session IMS

(43) Date of publication of application: 20.05.2009
(73) Proprietor: Alcatel Lucent, 75007 Paris (FR)
(72) Inventor: Wahl, Stefan, 71701 Schwieberdingen (DE); Oberle, Karsten, 68199 Mannheim (DE)
(74) Representative: Schmidt, Werner Karl

(56) References cited:
- WO-A-2007/002604
- WO-A-2007/071282
- US-A1- 2006 155 814
- US-A1- 2007 198 669
- SHACHAM R ET AL: "The virtual device: expanding wireless communication services through service discovery and session mobility" WIRELESS AND MOBILE COMPUTING, NETWORKING AND COMMUNICATIONS, 2005. (W IMOB'2005), IEEE INTERNATIONAL CONFERENCE ON MONTREAL, CANADA AUG. 22-24, 2005, PISCATAWAY, NJ, USA,IEEE, vol. 4, 22 August 2005 (2005-08-22), pages 73-81, XP010839733 ISBN: 978-0-7803-9181-9

## Description

The present invention relates to a method of establishing an IMS-session comprising at least one media-stream with a terminal associated with a user through an IP-packet based communication network, wherein the terminal is IP-capable, but SIP-incapable, and to an network node for executing the method.

There are more and more applications that interact with two or more users. Examples are IMS-services (IMS = IP Multimedia Subsystem, IP = Internet Protocol), like Voice over IP, conferencing, or video on demand services. Real time data streams associated with such services are transported through IP-packet based communication networks. These valuable services are made available by IMS-service providers for users or subscribers to these IMS-services which further account them for use of these services. These IMS-services comprise one or more media-streams mainly transmitted via the RTP protocol (RTP = real-time protocol). Further the SIP protocol (SIP = Session Initiation Protocol) is used to initiate the real-time session. Typically, a subscriber of such an IMS-service receives that service on his SIP-capable mobile phone.

For instance the subscriber watches a video provisioned by a video on demand IMS-service provider. The subscriber intends to transfer the provisioned video on a TV-set, since the TV-set provides a more convenient display of the video on the larger TV-screen than on the small display of the mobile phone. Up-to now such an IMS-session transfer requires that both terminals involved, here in the example the mobile phone and the TV-set, provide a SIP-user agent to realize the IMS-session transfer. SIP-session transfers are described for example in "The virtual device: expanding wireless communication services through service discovery and session mobility" of Shacham et. al. published "Wireless And Mobile Computing, Networking And Communications, 2005. (WiMob'2005), IEEE International Conference on" pages 73- 81 Vol. 4.

WO 2007/002604 A2 discloses a method of controlling and delivering media content from a media server (MS) to a media renderer (MR) utilizing a wide area IMS network for control. The method involves: provisioning a serving node in the IMS network with control point (CP) logic that includes logic to negotiate media content delivery with a least one of an MS and an MR; provisioning a user endpoint (UE) device of the IMS network with control point proxy (CPP) logic that includes logic to negotiate media content delivery and VCR controls to control-media presentation; in response to a media content delivery request, invoking the CPP logic and the CP logic to cooperatively negotiate media content delivery between an MS and an MR that uses local wireless or land line connections when possible in order to minimize wide area bandwidth usage.

US 2006/0155814 A1 discloses a media client for a networked communication device includes a user agent to communicate with a multimedia application in the networked communication device. The user agent provides a high-level application interface to the multimedia application. A signaling agent under the control of the user agent performs signaling operations necessary to establish and maintain communication sessions. A media agent under the control of the user agent performs media operations. The media client may be located in a network and remotely accessed by the multimedia application. The user agent, signaling agent and media agent have network interfaces that allow these elements to be distributed within the network and accessed remotely.

WO 2007/071282 A1 discloses a method and apparatus for enabling discovery within a home network by a non-IP Multimedia Subsystem enabled device detecting the availability of a Home IP Multimedia Subsystem Gateway. The method comprises interposing a Home IP Multimedia Subsystem Gateway at a control plane between a remote network and at least one non-IP Multimedia Subsystem enabled device. An advertisement message is sent to the or each non-IP Multimedia Subsystem enabled device. The advertisement message advertises the availability via the Home IP Multimedia Subsystem Gateway of services on the remote network.

US 2007/198669 A1 discloses a device of a plug-and-play type, which can be integrated in a home network having at least one audio-video Media-Server device or else at least one audio-video Media-Renderer device. The device can be activated for selectively configuring parameters and devices for setting up audio-video calls for connection between the home network and a packet network, such as the Internet. Preferentially, the device is based upon UPnP (Universal Plug-and-Play) technology and uses either a signaling protocol on IP packet network, such as the Session Initiation Protocol (SIP) and ITU-T H.323, or else mobile communications systems, such as the Universal Mobile Telecommunications System (UMTS). The device is able to redirect audio-video streams in the context of a plurality of devices capable of reproducing them and/or to selectively acquire said audio-video streams from a plurality of devices capable of supplying them.

Therefore, it is the object of the invention to provide a method for establishing an IMS-session with a IP-capable, but SIP-incapable terminal associated with a user.

The object of the present invention is achieved by a method for establishing an IMS-session comprising at least one media-stream with a terminal associated with a user through an IP-packet based communication network according to claim 1. The object of the present invention is also achieved by a network node for establishing an IMS-session comprising at least one media-stream with a terminal associated with a user through an IP-packet based communication network according to claim 9.

The object of the present invention is achieved by the method for establishing an IMS-session comprising at least one media-stream with a terminal associated with a user through an IP-packet based communication network, wherein the terminal is IP-capable, but SIP-incapable, whereby at an network node of the P-packet -based communication network, a SIP-signaling client instance associated with the user is initiated, wherein the SIP-signaling client instance represents the SIP-incapable terminal and terminates the SIP-signaling in place of the SIP-incapable terminal, and for establishing the IMS-session with the SIP-incapable terminal SIP-signaling messages are exchanged with the SIP-signaling client instance of the network node wherein the SIP-signaling client instance inserts a network address of the SIP-incapable terminal as receiving address of at least one media-stream of the IMS-session in at least one of the exchanged SIP-signaling messages. The object of the present invention is also achieved by the network node for establishing an IMS-session comprising at least one media-stream with a terminal associated with a user through an IP-packet based communication network, wherein the terminal is IP-capable, but SIP-incapable, whereby the network node has a controller adapted to initiate a SIP-signaling client instance associated with the user, wherein the SIP-signaling client instance represents the SIP-incapable terminal and terminates the SIP-signaling in place of the SIP-incapable terminal, and exchanges SIP-signaling messages for establishing the media-session, i.e. the IMS-session, with the SIP-incapable terminal and thereby inserts a network address of the SIP-incapable terminal as receiving address of the at least one media-stream of the IMS-session in at least one of the exchanged SIP-signaling messages.

The present invention enables IMS-session transfer to IP-capable but SIP-incapable terminals. The transfer is initiated by a user, which can be a SIP-user, for instance an IMS-service subscriber, or a none-SIP-user. It becomes possible for users, which are not equipped with a SIP-capable terminal, to access IMS-services and control these via a web-interface. The web-interface can provide a temporary SIP-user-agent to provide none-SIP-users with a SIP-user agent. Therefore the provisioning of IMS services is extended to none IMS-users. Further, the standardized IMS-architecture requires no modification or no adaptation, since the present invention is based on an application layer service which sits above the IMS control layer. The present invention can analogously be applied to none IMS- but SIP aware architectures

Further advantages are achieved by embodiments of the invention indicated by the dependent claims.

According to a preferred embodiment of the invention a database associated with the network node holds data about the user and data about one or more

SIP-incapable terminals, wherein the data about the one or more SIP-incapable terminals comprises data about network addresses, and/or IMS-session data assigned to the respective SIP-incapable terminal. IMS-session data are, for example, data about a codec, a quality of service or bandwidth demands assigned to the respective SIP incapable terminal. Furthermore, the database contains user preferences, like preferred qualities of service or preferred SIP-incapable terminals. The SIP-signaling client instance selects the data about the SIP-incapable terminal associated with the user. The SIP-signaling client instance uses the selected data about the SIP-incapable terminal associated with the user for establishing the IMS-session with the SIP-incapable terminal.

According to a preferred embodiment of the invention the network node provides a user interface to access the data about one or more SIP-incapable terminals held at the database upon a user-authentication. As described above, such a database can hold user-preferences of the user which could be specified and amended via the user interface. In order to guarantee a sufficient level of security for the user, the database can only be accessed after an successful authentication process of the user at the network node. Therefor, the database can also comprise information, like passwords, required for the authentication process of the user at the access boarder node by means of the user interface. The user-interface is a web-interface which can be accessed via the Internet by means of a web-browser.

According to a preferred embodiment of the invention the SIP-signaling client instance determines two or more network addresses of two or more different SIP-incapable terminals as the receiving addresses of at least one media-stream of the IMS-session. The SIP-signaling client instance inserts said .two or more network addresses of the two or more SIP-incapable terminals as receiving addresses of the respective media-streams of the IMS-session in at least one of the SIP-signaling messages exchanged for establishment of the IMS-session. In particular in a case, where the IMS-session comprises more than one media-stream, for example an audio-stream and a video-stream, it is possible to present these media-streams on different SIP-incapable terminals, which are IP-capable. For example, the audio-stream is presented on an IP-capable stereo, while the video-stream is presented on a high-definition Liquid Crystal Display. In the case that a SIP-capable terminal like a mobile phone initiates the transfer of the media-streams to the SIP incapable terminal, it is advantageous to adapt the quality of service and the bandwidth of the media-streams on the capabilities of the SIP-incapable terminal since in many cases the display of the mobile phone provides lower resolution as that of the SIP incapable terminal. Therefore it is desirable to request a high quality of service for displaying the video-stream on the high-definition Liquid Crystal Display. Analogously, a high quality of service can be requested for the audio-stream that should be presented on the stereo. If desirable, it is also possible to specify a lower quality of service when the SIP-incapable terminal is not able to support a high quality of service.

According to a preferred embodiment of the invention an SIP capable terminal associated with the user establishes the IMS-session and transfers the IMS-session comprising the at least one media-stream to a SIP-incapable terminal associated with the user. Furthermore it is possible that the SIP signaling client at the network node initiates the transfer of the IMS-session comprising the at least one media-stream to a SIP-capable terminal associated with the user. Thereby it is possible that the user of the IMS-service stays in control of the IMS-service he is accounted for.

According to the invention the network node provides access on the SIP-signaling client instance via a user-interface, i.e. a web-based user interface. The SIP-signaling client instance receives via the user-interface a network address as receiving address for the at least one media-stream of the IMS-session associated with the user. The SIP-signaling client instance uses the network address as receiving address for the at least one media-stream of the IMS-session at the establishment of the IMS-session with the SIP-incapable terminal. Therefore it is possible to temporarily provide IMS-services to users which do not own or can not access a SIP-capable terminal.

According to a further preferred embodiment of the invention the SIP-signaling client instance receives a notification for establishing or terminating the IMS-session with an IMS-server or a SIP-capable terminal via the user-interface. The SIP-signaling client instance initiates or terminates the IMS-session between the SIP-incapable terminal of the user upon receipt of the corresponding notification.

Preferably a user-authentication procedure is executed to protect the access to the SIP-signaling client instance. The access to the SIP-signaling client instance at the network node is provided or granted via the user interface upon successful authentication of the user associated with the SIP-signaling client instance. The user-authentication procedure, e.g. a password authentication, assures that correct accounting of the IMS-service is guaranteed.

According to a preferred embodiment of the invention the SIP-signaling client instance receives a SIP-signaling message requesting the establishment of the IMS-session. The SIP signaling client instance presents a notification of said request via a terminal, preferably a mobile phone, a PDA (PDA = Personal Digital Assistant) or a computer terminal, associated with the user. The notification can be rendered as an audio presentation via audio means of the terminal or by a flashing display of the terminal.

These as well as further features and advantages of the invention will be better appreciated by reading the following detailed description of presently preferred exemplary embodiments taken with the accompanying drawing of:
- Figure 1: shows a schematic sketch of a communication system with an network node according to the present invention.
- Figure 2: shows a flow diagram with various SIP-signaling and media-
- stream flows between interacting entities, whereby the IMS- session is originally initiated by a SIP-capable terminal.
- Figure 3: shows a flow diagram with various SIP-signaling and media- stream flows between interacting entities, whereby the IMS- session is originally initiated by means of a user-interface provided by the network node.

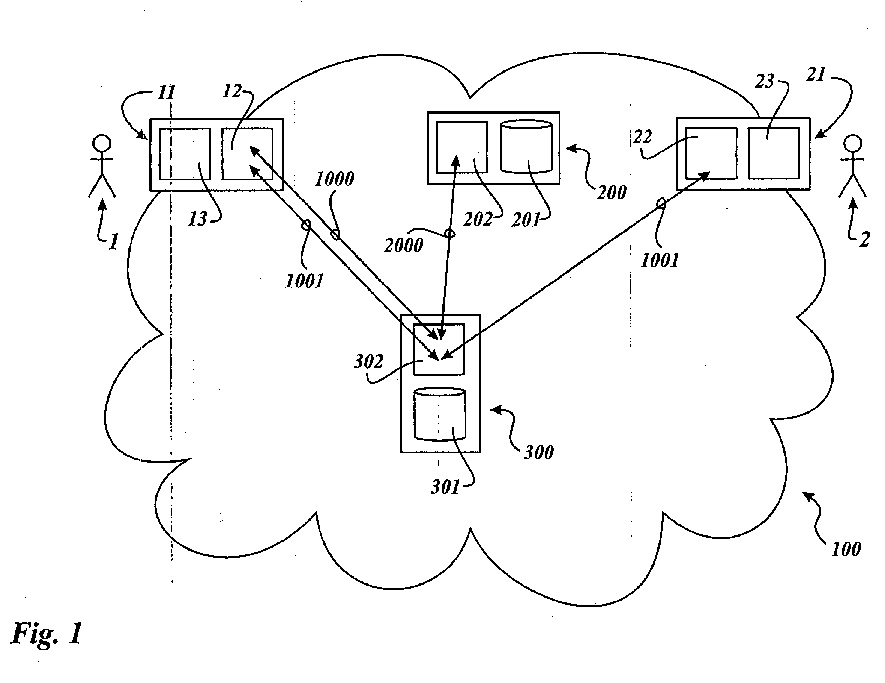

Figure 1 shows an IP-packet based communication network with various interacting entities, i.e. a SIP-capable terminal 11 of a user 1, an IMS-server 300 of an IMS service provider, a SIP-incapable terminal 21 of a user 2 and an network node 200. Preferably the network node 200 is an access border node.

The communication network 100 is an IP-packet based network. The communication network 100 comprises a plurality of network nodes, e.g. routers, servers, home subscriber servers, roaming servers, application servers as well as an IP Multimedia Subsystem, etc.. The network nodes provide an IP-routing infrastructure as well as a SIP infrastructure, e.g. SIP call servers, SIP registrars, SIP session border controllers, etc. The SIP infrastructure of the communication network 100 includes hardware means and/or software means for user identification, registration, authentication routing and redirecting SIP-signaling messages.

The SIP-capable terminal 11 comprises a display 13 and communication means 12 providing IP- and SIP-functionalities. Furthermore the SIP-capable terminal 11 holds a database for storing user preferences. It is also possible that the user preferences are stored at a presence server.

The IMS-server 300 comprises a controller, a database 301, and communication means 302. The IMS-server 300 provides functionality for accounting and for communicating via the SIP-protocol in the IP-packet based communication network 100.

The access boarder node 200 comprises a database 201, communication means 202 for communicating via the SIP protocol and a controller which provides the functionality of a SIP-signaling client instance. The network node 200 represents the SIP-incapable terminal 21 of the user 2. The SIP-incapable terminal 21 comprises a display 23 and communication means 22.

The communication means 12, 302, 202, 22 of the SIP-capable terminal 11, the IMS-server 300, the network node 200 and the SIP-incapable terminal 21 respectively comprise the necessary hardware and software means for communicating via the communication network 100. The communication means 12, 302, 202, 22, are for instance an Ethernet card, a modem, a wireless local area network card, and a TCP/IP stack (TCP = transmission control protocol).

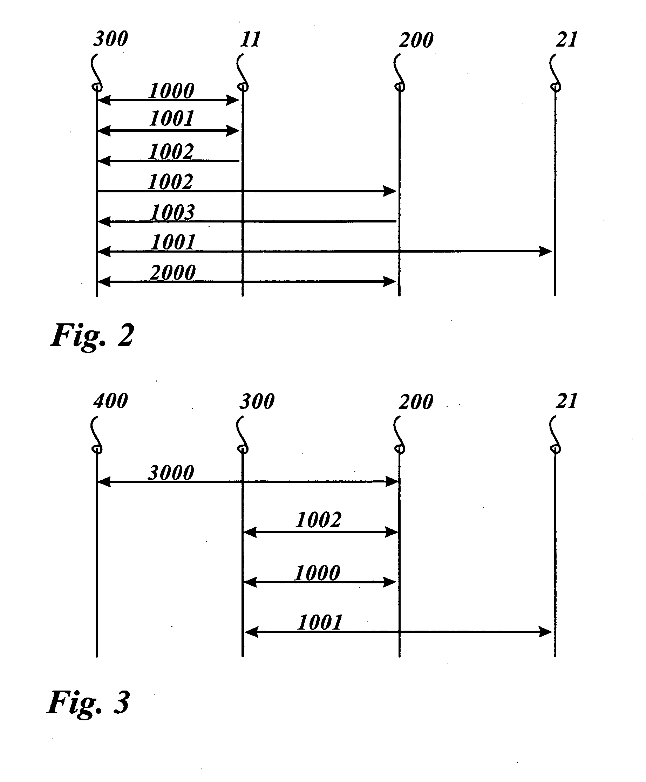

For example, the user 1 watches a video on demand on a SIP-capable terminal, e.g. a mobile phone, whereby the IMS-session is originally initiated by means of the SIP-capable terminal 11 of the user 1. Figure 2 shows a corresponding sequence of SIP-signaling and media-stream flows between the interacting entities.

The user 1 exchanges via the SIP-capable terminal 11 SIP-signaling messages 1000. By means of exchange of these messages, the user 1 requests the respective media-stream for the video on demand.

In a next step, the IMS server 300 transmits the media-streams 1001 to the SIP-capable terminal 11 of the user 1. The user 1 is accounted for the IMS-service provided by the IMS-service provider. The media-streams 1001 are preferably transported by means of the RTP protocol through the communication network 100.

The user 1 visits the user 2, e.g. his friend, while watching the video on demand on his SIP-capable terminal 11. The user 2 owns only an IP-capable terminal 21 which is a TV-set with a connected set-top box to provide IP-functionality to the TV-set. Since the TV-set provides a better resolution and audio quality of service, the user 1 likes to transfer the IMS-service, i.e. the media-streams 1001 of the video on demand, to the IP-capable terminal 21, which is SIP-incapable.

In a next step, the terminal 11 sends a SIP-reinvite message to the IMS-server 300. This SIP-reinvite message comprises a request for transfer the IMS-session to the SIP-incapable terminal 21 of the user 2. This request is preferably specified by means of a SDP protocol (SDP = session description protocol) and further requests a higher bandwidth and higher qualities of service of the audio- and video-stream, i.e. the media-streams 1001. The IMS-server 300 forwards the SIP-reinvite message 1002 to the network node 200 which represents the SIP-incapable terminal 21. Upon reception of the SIP-reinvite message 1002, the network node 200 initiates a SIP-signaling client instance representing the SIP-incapable terminal 21 of the user 2 and thereby forming a logical entity, i.e. logical device comprising the SIP-incapable terminal 21 and SIP-signaling instance for providing full SIP-functionality. The SIP-signaling client instance consults the database 201 to determine the network address of the SIP-incapable terminal 21. The network address of the SIP-incapable terminal 21 is inserted as receiving address of the at least one media-stream 1001 of the IMS-session in a the SIP-reinvite message and transmitted as a SIP-reinvite 1003 to the IMS-server 300. The IMS-server 300 receives the SIP-reinvite message 1003 and redirects the at least one media-stream 1001 of the IMS-session to the SIP-incapable terminal 21 of the user 2. Further SIP-signaling messages may be exchanged between the network node 200 and the IMS-server 300, e.g. to adapt the codec, quality of service parameters and bandwidth constraints on the capabilities of the terminal 21.

Further, it is possible, that the SIP-signaling client instance accesses a database associated with the user 2 before inserting the network address of the SIP-incapable terminal 21 as receiving address of at least one media-stream 1001 of the IMS-session. Preferably, this database holds data about the user 2 and data about two or more SIP-incapable terminals assigned to the user 2. The data about the user 2, comprises, for example, user-preferences and authentication data. The user preferences of the user 1 comprise, for example, preferred SIP-incapable terminals, codecs or preferred quality of services and bandwidth requirements associated with different SIP-incapable terminals. The data about one or more SIP-incapable terminals comprise, for instance, codecs, quality of service, and bandwidths constraints of the one or more SIP-incapable terminals. If the parameters specified in the SIP-reinvite message 1002 do not match the capabilities of the SIP-incapable 21, the SIP-signaling client instance selects by means of the database appropriate IMS-session parameters, like the codec, the quality of service or the bandwidth.

At any time, the user 1 can access the data associated with the user 1 via a user-interface upon a user-authentication, which can be for instance a password authentication procedure. The data resides at the mobile phone, i.e. the SIP-capable terminal 11, the network node 200 or the IMS-server 300. Therefore, the user 1 can change data associated with the user 1. For instance, the user 1 can change the user preference or IMS-session data assigned to the respective SIP-incapable terminal.

Further it is possible that the media-streams 1001 of the video on demand, i.e. the audio-stream and video-stream, is directed to two different SIP-incapable termimals. For instance the user 2 has also a stereo connected to the Internet via a set-top box for providing IP-functionality to the stereo. The user 1 can request two or more different terminals for presenting the at least one media-stream 1001, i.e. the audio-stream and the video-stream, of the IMS-session. The SIP-signaling instance at the network node 200 inserts the network address of the stereo and the network address of the TV-set 21 as receiving addresses of the respective media-streams 1001 of the IMS-session into the SIP-reinvite message 1003.

After the user 1 has watched the video, the user 1 likes to retransfer the IMS-session back to his mobile phone, i.e. the SIP-capable terminal 11. The user 1 sends a respective SIP-signaling message to the IMS-server 300 to initiate the retransfer of the at least one media-stream to the SIP-capable terminal 11. The IMS-server sends a corresponding SIP-signaling message 2000 to the network node 200. The SIP-signaling client instance at the network node 200 receives the SIP-signaling message 2000 sent by a SIP-capable terminal, i.e. the IMS-server, for transferring the IMS-session comprising the at least one media-stream 1001 associated with the user 1 to the SIP-capable terminal 11 associated with the user 1. The SIP-signaling client instance at the network node 200 sends SIP-signaling messages 2000 to the IMS-server 300 for transferring the IMS-session comprising the at least one media-stream to the SIP-capable terminal and terminates it-self at the network node 200. Now, the IMS-server 300 transmits the media-streams 1001 to the SIP-capable terminal 11, i.e. the mobile phone, of the user 1.

In-further preferred embodiment of the present invention the user-1 establishes the IMS-session comprising at least one media-stream 1001 with the SIP-incapable terminal 21 not via a SIP-capable terminal 11 associated with the user 1, but by means of an user interface accessible via the IP-packet based communication network 100. The user-interface resides at the network node 200 of the IMS-service provider. Figure 3 shows a sequence of principle time ordered SIP-signaling and media-stream flows between the interacting entities, whereby the IMS-session is originally initiated by means of an user-interface provided by the IMS-session provider.

The user 1 accesses the user-interface at the access boarder node 200, for instance, via a web-interface through the !P-packet based communication network 100. The user 1, which is preferably identical to the user 2 of the SIP-incapable terminal 21, can access the web-interface by means of a IP-capable terminal 400. The IP-capable terminal 400, preferably a personal computer, comprises at least input means, display means, communication means for providing IP-functionality to the IP-capable terminal 400 and a web-browser for accessing the user-interface provided at the network node 200.

The access boarder node 200 initiates a SIP-signaling client instance. In order to access this SIP signaling instance the access boarder node 200 executes an authentication procedure. Preferably the user 1 has to enter a login name and a respective password at the web-interface by means of a web-browser. The user 1 selects, by means of the user-interface, the type of the IMS-service and one or more destination devices, i.e. one or more SIP-incapable terminals 21. Figure 3 indicates the respective IP-packet based message transfer 3000 between the IP-capable terminal 400 and the access boarder node 200.

For example, the user 1 likes - as IMS-service - to watch a video on demand whereby the video on demand comprises as media-streams 1001 an audio-stream and a video-stream. The user 1 likes to direct the audio-stream of the IMS service to his IP-capable radio or multi-channel audio system and the video-stream of the IMS-service to the display 22 of his IP-capable terminal 400. By means of the web-browser at the IP-capable terminal 400 the user 1 access the user-interface, i.e. the web-interface, of the network node 200 for selecting IMS-session parameters of the SIP-incapable terminals. The user 1 selects the network address of the radio or multi-channel audio system as receiving address of the audio-stream of the IMS-service. The user 1 selects the network address of the IP-capable terminal 400 as receiving address of the video-stream of the IMS-service. Further the user 1 selects codec and bandwidth for presenting the media-streams of the video on demand. If the media-stream is requested with a codec which is not provided by the IMS-session provider, the IMS-session provider provides respective transcoding means, realized by hardware and/or software means, within the infrastructure of the IMS-subsystem.

After the user 1 has set all preferences for the IMS-session, the SIP-signaling client instance inserts these preference network addresses as the receiving addresses of the media-streams into a SIP-signaling message 1000, preferably a SIP-reinvite message, and specifies codecs, bandwidths, etc. by mean of the SDP protocol. The SIP-signaling message 1000 is sent to the IMS-server 300 for requesting the establishment of the IMS-session with one or more SIP-incapable terminals 21. The IMS-server 300 renders the media-streams of the IMS-session to the specified SIP-incapable terminals.

Preferably, the user 1 has the possibility to change IMS-session parameters via the web-interface. Further, the user 1 can send a notification to the SIP signaling client instance not only to initiate, but also to terminate the IMS-session and further to terminate the access, i.e. perform logout procedure, at the user interface of the network node 200 and terminate thereby the SIP-signaling client instance.

It is possible that the SIP-signaling client instance associated with the user 1 does notify the user 1 about a request for establishment of an IMS-session by means of presenting an audio-stream or an other media-stream at the SIP-incapable terminal 21 of the user 1. For instance the SIP-signaling inserts a network address of an IP capable radio or multi channel audio system, i.e. the SIP-incapable terminal 21, as receiving address into a SIP-reinvite message 1002 directed to a media server. The media server transmits a predefined media-stream to the IP-capable radio or multi-channel audio system, for example a ringing tone or another kind of audio notification that indicates an incoming request for establishment of an IMS-session.

## Claims

1. Method of establishing an IMS-session comprising at least one media-stream (1001) between an IMS server and a terminal (21) associated with a user (1) through an IP-packet based communication network (100), wherein the terminal (21) is IP-capable, but SIP-incapable,
whereby the method comprises the steps of:
initiating, at an network node (200) of the IP-packet based communication network (100), a SIP-signaling client instance associated with the user (1), wherein the SIP-signaling client instance represents the SIP-incapable terminal (21) and terminates the SIP-signaling in place of the SIP-incapable terminal (21),
providing access to the SIP-signaling client instance at the network node (200) via a user-interface which is a web-interface accessible via the Internet by means of a web-browser,
receiving, by the SIP-signaling client instance, via the user-interface a network address as receiving address for the at least one media-stream (1001) of the IMS-session associated with the user (1),
using, by the SIP-signaling client instance, the network address as receiving address for the at least one media-stream (1001) of the IMS-session at the establishment of the IMS-session with the SIP-incapable terminal (21),
establishing an IMS-session between an IMS server and a SIP-capable terminal (11),
transferring said IMS-session to the SIP-incapable terminal (21),
for establishing the IMS-session with the SIP-incapable terminal (21),
exchanging SIP-signaling messages with the SIP-signaling client instance of the network node (200) wherein the SIP-signaling client instance inserts the network address of the SIP-incapable terminal (21) as receiving address of at least one media-stream (1001) of the IMS-session in at least one of the exchanged SIP-signaling messages and
exchanging further SIP-signaling messages between the network node (200) and the IMS-server (300).

2. Method for establishing an IMS-session according to claim 1, whereby the method comprises the further steps of:
holding, at a database associated with the network node (200), data about the user (1) and data about one or more SIP-incapable terminals,
wherein the data about the one or more SIP-incapable terminals comprises data about network addresses, and/or IMS-session data assigned to the respective SIP-incapable terminal (21), in particular data about a codec, a quality of service or a bandwidth, selecting, by the SIP-signaling client instance, the data about the SIP-incapable terminal (21) associated with the user (1), and
using, by the SIP-signaling client instance, the selected data about the SIP-incapable terminal (21) associated with the user (1) for establishing the IMS-session with the-SIP-incapable terminal (21).

3. Method for establishing an IMS-session according to claim 1, whereby the method comprises the further steps of:
holding, at a database associated with the network node (200), data about the user (1) and about one or more SIP-incapable terminals,
wherein the data about the one or more SIP-incapable terminals comprises data about network addresses, and/or IMS-session data assigned to the respective SIP-incapable terminal (21), in particular data about a codec, a quality of service or a bandwidth, and
providing access to data about one or more SIP-incapable terminals held at the database via the user-interface upon a user-authentication.

4. Method for establishing an IMS-session according to claim 1, whereby the method comprises the steps of:
determining, by the SIP-signaling client instance, two or more network addresses of two or more different SIP-incapable terminals as the receiving addresses of at least one media-stream (1001) of the IMS-session,
inserting, by the SIP-signaling client instance, said two or more network addresses of the two or more SIP-incapable terminals as receiving addresses of the respective media-stream (1001) of the IMS-session in at least one the SIP-signaling messages exchanged for establishment of the IMS-session.

5. Method for establishing an IMS-session according to claim 1, whereby the method comprises the further steps of:
establishing the IMS session with a SIP-capable terminal (11) and transferring said IMS session to the SIP incapable terminal (21).

6. Method for establishing an IMS-session according to claim 1, whereby the method comprises the further steps of:
providing access to the SIP-signaling client instance at the network node (200) via the user-interface,
receiving, by the SIP-signaling client instance, via the user-interface a notification for establishing or terminating the IMS-session with the IMS-server (300) or the SIP-capable terminal (11), and
initiating or terminating, by the SIP-signaling client instance, the IMS-session between the SIP-incapable terminal (21) of the user (1) and the IMS-server (300) or between the SIP-incapable terminal (21) of the user (1) and the SIP-capable terminal (11) upon receipt of the corresponding notification.

7. Method for establishing an IMS-session according to claim 1,
whereby the method comprises the further steps of:
executing a user authentication procedure, and
providing access to the SIP-signaling client instance at the network node (200) via the user-interface upon successful authentication of user (1) associated with the SIP-signaling client instance.

8. Method for establishing an IMS-session according to claim 1,
whereby the method comprises the further steps of:
receiving, by the SIP-signaling client instance, a SIP-signaling message requesting the establishment of the IMS-session, and
presenting, by the SIP-signaling client instance, a notification of said request via a terminal.

9. A network node (200) for establishing an IMS-session comprising at least one media-stream (1001) between an IMS server and a terminal (21) associated with a user (1) through an IP-packet based communication network (100), wherein the terminal (21) is IP-capable, but SIP-incapable,
whereby the network node (200) has a controller (202) adapted to:
initiate a SIP-signaling client instance associated with the user (1),
wherein the SIP-signaling client instance represents the SIP-incapable terminal (21) and terminates the SIP-signaling in place of the SIP-incapable terminal (21),
provide access to the SIP-signaling client instance at the network node (200) via a user-interface which is a web-interface accessible via the Internet by means of a web-browser,
receive, by the SIP-signaling client instance, via the user-interface a network address as receiving address for the at least one media-stream (1001) of the IMS-session associated with the user (1),
use, by the SIP-signaling client instance, the network address as receiving address for the at least one media-stream (1001) of the IMS-session at the establishment of the IMS-session with the SIP-incapable terminal (21),
establish an IMS-session between an IMS server and a SIP-capable terminal (11),
transfer said IMS-session to the SIP-incapable terminal (21),
exchange SIP-signaling messages for establishing the IMS-session with the SIP-incapable terminal (21) and thereby inserts the network address of the SIP-incapable terminal (21) as receiving address of the at least one media-stream (1001) of the IMS session in at least one of the
exchanged SIP-signaling messages and exchange further SIP-signaling messages between the network node (200) and the IMS-server (300).

## Patentansprüche

1. Verfahren zur Erstellung einer IMS-Sitzung mit mindestens einem Medienstrom (1001) zwischen einem IMS-Server und einem mit einem Benutzer (1) assoziierten Endgerät (21) über ein IP-Paket-basiertes Kommunikationsnetzwerk (100), wobei das Endgerät (21) IP-fähig, jedoch nicht SIP-fähig ist,
wobei das Verfahren die folgenden Schritte umfasst:
Initiieren, an einem Netwerkknoten (200) des IP-Paket-basierten Kommunikationsnetzwerks (100), einer mit dem Benutzer (1) assoziierten SIP-Signalisierungs-Clientinstanz, wobei die SIP-Signalisierungs-Clientinstanz das nicht SIP-fähige Endgerät (21) darstellt und die SIP-Signalisierung anstelle des nicht SIP-fähigen Endgeräts (21) beendet,
Bereitstellen des Zugangs zu der SIP-Signalisierungs-Clientinstanz an dem Netzwerkknoten (200) über eine Benutzerschnittstelle, welche eine mittels eines Webbrowsers über das Internet zugängliche Webschnittstelle ist, Empfangen, über die Benutzerschnittstelle, einer Netzwerkadresse als Empfangsadresse für den mindestens einen Medienstrom (1001) der mit dem Benutzer (1) assoziierten IMS-Sitzung an der SIP-Signalisierungs-Clientinstanz, Verwenden, durch die SIP-Signalisierungs-Clientinstanz, der Netzwerkadresse als Empfangsadresse für den mindestens einen Medienstrom (1001) der IMS-Sitzung bei der Erstellung der IMS-Sitzung mit dem nicht SIP-fähigen Endgerät (21),
Erstellen einer IMS-Sitzung zwischen einem IMS-Server und einem SIP-fähigen Endgerät (11),
Transferieren der besagten IMS-Sitzung an das nicht SIP-fähige Endgerät (21),
zum Erstellen der IMS-Sitzung mit dem nicht SIP-fähigen Endgerät (21),
Austauschen von SIP-Signalisierungsnachrichten mit der SIP-Signalisierungs-Clientinstanz des Netzwerkknotens (200), wobei die SIP-Signalisierungs-Clientinstanz die Netzwerkadresse des nicht SIP-fähigen Endgeräts (21) als Empfangsadresse für mindestens einen Medienstrom (1001) der IMS-Sitzung in mindestens eine der ausgetauschten SIP-Signalisierungsnachrichten einfügt, und
Austauschen weiterer SIP-Signalisierungsnachrichten zwischen dem Netzwerkknoten (200) und dem IMS-Server (300).

2. Verfahren zur Erstellung einer IMS-Sitzung nach Anspruch 1, wobei das Verfahren die folgenden weiteren Schritte umfasst:
Halten, in einer mit dem Netzwerkknoten (200) assoziierten Datenbank, von Daten über den Benutzer (1) und Daten über ein oder mehrere nicht SIP-fähige Endgeräte,
wobei die Daten über das eine oder die mehreren nicht SIP-fähigen Endgeräte Daten über Netzwerkadressen und/oder dem jeweiligen nicht SIP-fähigen Endgerät (21) zugewiesene IMS-Sitzungsdaten, insbesondere Daten über einen Codec, eine Dienstgüte oder eine Bandbreite, umfassen,
Auswählen, durch die SIP-Signalisierungs-Clientinstanz, der Daten über das mit dem Benutzer (1) assoziierte nicht SIP-fähige Endgerät (21), und
Verwenden, durch die SIP-Signalisierungs-Clientinstanz, der ausgewählten Daten über das mit dem Benutzer (1) assoziierte nicht SIP-fähige Endgerät (21) zum Erstellen der IMS-Sitzung mit dem nicht SIP-fähigen Endgerät (21).

3. Verfahren zur Erstellung einer IMS-Sitzung nach Anspruch 1, wobei das Verfahren die folgenden weiteren Schritte umfasst:
Halten, in einer mit dem Netzwerkknoten (200) assoziierten Datenbank, von Daten über den Benutzer (1) und über ein oder mehrere nicht SIP-fähige Endgeräte, wobei die Daten über das eine oder die mehreren nicht SIP-fähigen Endgeräte Daten über Netzwerkadressen und/oder dem jeweiligen nicht SIP-fähigen Endgerät (21) zugewiesene IMS-Sitzungsdaten, insbesondere Daten über einen Codec, eine Dienstgüte oder eine Bandbreite, umfassen, und
Bereitstellen des Zugriffs auf in der Datenbank gehaltene Daten über ein oder mehrere nicht SIP-fähige Endgeräte über die Benutzerschnittstelle bei Authentifizierung des Benutzers.

4. Verfahren zur Erstellung einer IMS-Sitzung nach Anspruch 1, wobei das Verfahren die folgenden Schritte umfasst:
Bestimmen, durch die SIP-Signalisierungs-Clientinstanz, von zwei oder mehr Netzwerkadressen von zwei oder mehr verschiedenen nicht SIP-fähigen Endgeräten als die Empfangsadresse für mindestens einen Medienstrom (1001) der IMS-Sitzung,
Einfügen, durch die SIP-Signalisierungs-Clientinstanz, der besagten zwei oder mehr Netzwerkadressen der zwei oder mehr nicht SIP-fähigen Endgeräte als Empfangsadresse für den jeweiligen Medienstrom (1001) der IMS-Sitzung in mindestens eine der für die Erstellung der IMS-Sitzung ausgetauschten SIP-Signalisierungsnachrichten.

5. Verfahren zur Erstellung einer IMS-Sitzung nach Anspruch 1, wobei das Verfahren die folgenden weiteren Schritte umfasst:
Erstellen der IMS-Sitzung mit einem SIP-fähigen Endgerät (11), und
Transferieren der besagten IMS-Sitzung an das nicht SIP-fähige Endgerät (21).

6. Verfahren zur Erstellung einer IMS-Sitzung nach Anspruch 1, wobei das Verfahren die folgenden weiteren Schritte umfasst:
Bereitstellen des Zugangs zu der SIP-Signalisierungs-Clientinstanz an dem Netzwerkknoten (200) über die Benutzerschnittstelle, Empfangen, an der SIP-Signalisierungs-Clientinstanz, einer Mitteilung zum Erstellen oder Beenden der IMS-Sitzung mit dem IMS-Server (300) oder dem SIP-fähigen Endgerät (11) über die Benutzerschnittstelle
Initiieren oder Beenden, durch die SIP-Signalisierungs-Clientinstanz, der IMS-Sitzung zwischen dem nicht SIP-fähigen Endgerät (21) des Benutzers (1) und dem IMS-Server (300) oder zwischen dem nicht SIP-fähigen Endgerät (21) des Benutzers (1) und dem SIP-fähigen Endgerät (11) bei Empfang der entsprechenden Mitteilung.

7. Verfahren zur Erstellung einer IMS-Sitzung nach Anspruch 1, wobei das Verfahren die folgenden weiteren Schritte umfasst:
Durchführen eines Benutzerauthentifizierungsvorgangs, und
Bereitstellen des Zugangs zu der SIP-Signalisierungs-Clientinstanz an dem Netzwerkknoten (200) über die Benutzerschnittstelle bei erfolgreicher Authentifizierung des mit der SIP-Signalisierungs-Clientinstanz assoziierten Benutzers (1).

8. Verfahren zur Erstellung einer IMS-Sitzung nach Anspruch 1, wobei das Verfahren die folgenden weiteren Schritte umfasst:
Empfangen, an der SIP-Signalisierungs-Clientinstanz, einer SIP-Signalisierungsnachricht, welche die Erstellung der IMS-Sitzung anfordert, und
Präsentieren, durch die SIP-Signalisierungs-Clientinstanz, einer Mitteilung der besagten Anforderung über das Endgerät.

9. Netzwerkknoten (200) zur Erstellung einer IMS-Sitzung, welche mindestens einen Medienstrom (1001) zwischen einem IMS-Server und einem mit einem Benutzer (1) assoziierten Endgerät (21) über ein IP-Paket-basiertes Kommunikationsnetzwerk (100) umfasst, wobei das Endgerät (21) IP-fähig, jedoch nicht SIP-fähig ist,
wobei der Netzwerkknoten (200) einen Controller (202) aufweist, welcher für das Durchführen der folgenden Schritte ausgelegt ist:
Initiieren einer mit dem Benutzer (1) assoziierten SIP-Signalisierungs-Clientinstanz,
wobei die SIP-Signalisierungs-Clientinstanz das nicht SIP-fähige Endgerät (21) darstellt und die SIP-Signalisierung anstelle des nicht SIP-fähigen Endgeräts (21) beendet,
Bereitstellen des Zugangs zu der SIP-Signalisierungs-Clientinstanz an dem Netzwerkknoten (200) über eine Benutzerschnittstelle, welche eine mittels eines Webbrowsers über das Internet zugängliche Webschnittstelle ist, Empfangen, über die Benutzerschnittstelle, einer Netzwerkadresse als Empfangsadresse für den mindestens einen Medienstrom (1001) der mit dem Benutzer (1) assoziierten IMS-Sitzung an der SIP-Signalisierungs-Clientinstanz, Verwenden, durch die SIP-Signalisierungs-Clientinstanz, der Netzwerkadresse als Empfangsadresse für den mindestens einen Medienstrom (1001) der IMS-Sitzung bei der Erstellung der IMS-Sitzung mit dem nicht SIP-fähigen Endgerät (21),
Erstellen einer IMS-Sitzung zwischen einem IMS-Server und einem SIP-fähigen Endgerät (11),
Transferieren der besagten IMS-Sitzung an das nicht SIP-fähige Endgerät (21),
zum Erstellen der IMS-Sitzung mit dem nicht SIP-fähigen Endgerät (21), Austauschen von SIP-Signalisierungsnachrichten für die Erstellung der IMS-Sitzung mit dem nicht SIP-fähigen Endgerät (21), und Einfügen der Netzwerkadresse des nicht SIP-fähigen Endgeräts (21) als Empfangsadresse für den mindestens einen Medienstrom (1001) der IMS-Sitzung in mindestens eine der ausgetauschten SIP-Signalisierungsnachrichten, und Austauschen weiterer SIP-Signalisierungsnachrichten zwischen dem Netzwerkknoten (200) und dem IMS-Server (300).

## Revendications

1. Procédé pour établir une session IMS comprenant au moins un flux multimédia (1001) entre un serveur IMS et un terminal (21) associé à un utilisateur (1) par l'intermédiaire d'un réseau de communication par paquets IP (100), dans lequel le terminal (21) est compatible IP, mais incompatible SIP,
le procédé comprenant les étapes suivantes :
initier, au niveau d'un noeud de réseau (200) du réseau de communication par paquets IP (100), une instance de client de signalisation SIP associée à l'utilisateur (1), dans lequel l'instance de client de signalisation SIP représente le terminal incompatible SIP (21) et interrompt la signalisation SIP à la place du terminal incompatible SIP (21),
fournir l'accès à l'instance de client de signalisation SIP au niveau du noeud de réseau (200) par l'intermédiaire d'une interface utilisateur qui est une interface Web accessible par l'intermédiaire d'Internet au moyen d'un navigateur Web, recevoir, au moyen de l'instance de client de signalisation SIP, par l'intermédiaire de l'interface utilisateur une adresse de réseau comme adresse de réception pour l'au moins un flux multimédia (1001) de la session IMS associée à l'utilisateur (1), utiliser, au moyen de l'instance de client de signalisation SIP, l'adresse de réseau comme adresse de réception pour l'au moins un flux multimédia (1001) de la session IMS lors de l'établissement de la session IMS avec le terminal incompatible SIP (21),
établir une session IMS entre un serveur IMS et un terminal compatible SIP (11 ),
transférer ladite session IMS vers le terminal incompatible SIP (21), pour établir la session IMS avec le terminal incompatible SIP (21),
échanger des messages de signalisation SIP avec l'instance de client de signalisation SIP du noeud de réseau (200) dans lequel l'instance de client de signalisation SIP insère l'adresse de réseau du terminal incompatible SIP (21) comme adresse de réception d'au moins un flux multimédia (1001) de la session IMS dans au moins un des messages de signalisation SIP échangés et échanger d'autres messages de signalisation SIP entre le noeud de réseau (200) et le serveur IMS (300).

2. Procédé pour établir une session IMS selon la revendication 1,
le procédé comprenant les étapes supplémentaires suivantes :
conserver, dans une base de données associée au noeud de réseau (200), des données sur l'utilisateur (1) et des données sur un ou plusieurs terminaux incompatibles SIP, dans lequel les données sur le ou les terminaux incompatibles SIP comprennent des données sur des adresses de réseau, et/ou des données de session IMS attribuées au terminal incompatible SIP (21) respectif, en particulier des données sur un codec, une qualité de service ou une bande passante, sélectionner, au moyen de l'instance de client de signalisation SIP, les données sur le terminal incompatible SIP (21) associé à l'utilisateur (1), et
utiliser, au moyen de l'instance de client de signalisation SIP, les données sélectionnées sur le terminal incompatible SIP (21) associé à l'utilisateur (1) pour établir la session IMS avec le terminal incompatible SIP (21).

3. Procédé pour établir une session IMS selon la revendication 1,
le procédé comprenant les étapes supplémentaires suivantes :
conserver, dans une base de données associée au noeud de réseau (200), des données sur l'utilisateur (1) et sur un ou plusieurs terminaux incompatibles SIP,
dans lequel les données sur le ou les terminaux incompatibles SIP comprennent des données sur des adresses de réseau, et/ou des données de session IMS attribuées au terminal incompatible SIP (21) respectif, en particulier des données sur un codec, une qualité de service ou une bande passante, et
fournir l'accès aux données sur un ou plusieurs terminaux incompatibles SIP conservées dans la base de données par l'intermédiaire de l'interface utilisateur lors d'une authentification d'utilisateur.

4. Procédé pour établir une session IMS selon la revendication 1,
le procédé comprenant les étapes suivantes :
déterminer, au moyen de l'instance de client de signalisation SIP, au moins deux adresses de réseau d'au moins deux terminaux incompatibles SIP différents comme adresses de réception d'au moins un flux multimédia (1001) de la session IMS, insérer, au moyen de l'instance de client de signalisation SIP, lesdites au moins deux adresses de réseau des au moins deux terminaux incompatibles SIP comme adresses de réception du flux multimédia (1001) respectif de la session IMS dans au moins un des messages de signalisation SIP échangés pour l'établissement de la session IMS.

5. Procédé pour établir une session IMS selon la revendication 1,
le procédé comprenant les étapes supplémentaires suivantes :
établir la session IMS avec un terminal compatible SIP (11) et
transférer ladite session IMS vers le terminal incompatible SIP (21).

6. Procédé pour établir une session IMS selon la revendication 1,
le procédé comprenant les étapes supplémentaires suivantes :
fournir l'accès à l'instance de client de signalisation SIP au niveau du noeud de réseau (200) par l'intermédiaire de l'interface utilisateur, recevoir, au moyen de l'instance de client de signalisation SIP, par l'intermédiaire de l'interface utilisateur une notification pour établir ou interrompre la session IMS avec le serveur IMS (300) ou le terminal compatible SIP (11), et
initier ou interrompre, au moyen de l'instance de client de signalisation SIP, la session IMS entre le terminal incompatible SIP (21) de l'utilisateur (1) et le serveur IMS (300) ou entre le terminal incompatible SIP (21) de l'utilisateur (1) et le terminal compatible SIP (11) lors de la réception de la notification correspondante.

7. Procédé pour établir une session IMS selon la revendication 1,
le procédé comprenant les étapes supplémentaires suivantes:
exécuter une procédure d'authentification d'utilisateur, et
fournir l'accès à l'instance de client de signalisation SIP au niveau du noeud de réseau (200) par l'intermédiaire de l'interface utilisateur lors de l'authentification réussie de l'utilisateur (1) associé à l'instance de client de signalisation SIP.

8. Procédé pour établir une session IMS selon la revendication 1,
le procédé comprenant les étapes supplémentaires suivantes :
recevoir, au moyen de l'instance de client de signalisation SIP, un message de signalisation SIP demandant l'établissement de la session IMS, et
présenter, au moyen de l'instance de client de signalisation SIP, une notification de ladite demande par l'intermédiaire d'un terminal.

9. Noeud de réseau (200) pour établir une session IMS comprenant au moins un flux multimédia (1001) entre un serveur IMS et un terminal (21) associé à un utilisateur (1) par l'intermédiaire d'un réseau de communication par paquets IP (100), dans lequel le terminal (21) est compatible IP, mais incompatible SIP,
le noeud de réseau (200) présentant un contrôleur (202) adapté pour : initier une instance de client de signalisation SIP associée à l'utilisateur (1), dans lequel l'instance de client de signalisation SIP représente le terminal incompatible SIP (21) et interrompt la signalisation SIP à la place du terminal incompatible SIP (21), fournir l'accès à l'instance de client de signalisation SIP au niveau du noeud de réseau (200) par l'intermédiaire d'une interface utilisateur qui est une interface Web accessible par l'intermédiaire d'Internet au moyen d'un navigateur Web, recevoir, au moyen de l'instance de client de signalisation SIP, par l'intermédiaire de l'interface utilisateur une adresse de réseau comme adresse de réception pour l'au moins un flux multimédia (1001) de la session IMS associée à l'utilisateur (1), utiliser, au moyen de l'instance de client de signalisation SIP, l'adresse de réseau comme adresse de réception pour l'au moins un flux multimédia (1001) de la session IMS lors de l'établissement de la session IMS avec le terminal incompatible SIP (21).
établir une session IMS entre un serveur IMS et un terminal compatible SIP (11), transférer ladite session IMS vers le terminal incompatible SIP (21),
échanger des messages de signalisation SIP pour établir la session IMS avec le terminal incompatible SIP (21) et insère ainsi l'adresse de réseau du terminal incompatible SIP (21) comme adresse de réception de l'au moins un flux multimédia (1001) de la session IMS dans au moins un des messages de signalisation SIP échangés et échanger d'autres messages de signalisation SIP entre le noeud de réseau (200) et le serveur IMS (300).
